# EUROPEAN PATENT APPLICATION

(11) **EP 4 836 170 A1**
(43) Date of publication of application: **04.11.2026**
(21) Application number: 25886419.8
(22) Date of filing: 16.10.2025
(51) Int. Cl.: H01M 50/533, H01M 50/536, H01M 50/538, H01M 50/54, H01M 10/0585

(54) **ELECTRODE ASSEMBLY**

(30) Priority: 31.10.2024 KR 20240151935
(71) Applicant: LG Energy Solution, Ltd., Seoul 07335 (KR)
(72) Inventor: JO, Young Soo, Daejeon 34122 (KR); YOO, Kwang Ho, Daejeon 34122 (KR); KIM, Su Hwan, Daejeon 34122 (KR); KIM, Dong Yun, Daejeon 34122 (KR); LEE, Sung Won, Daejeon 34122 (KR); EOM, Tack Geon, Daejeon 34122 (KR); LEE, Seung Hyun, Daejeon 34122 (KR); HONG, Ji Su, Daejeon 34122 (KR)
(74) Representative: Goddar, Heinz J.
(86) International application number: PCT/KR2025/016403
(87) International publication number: WO 2026/095448

(57) **Abstract**

The technical idea of the present disclosure provides an electrode assembly including: a stack including a plurality of first electrodes stacked in a vertical direction; and a first conductive jig connected to electrode tabs of the plurality of first electrodes, wherein the plurality of first electrodes includes a first lowermost electrode which is lowermost among the plurality of first electrodes, a first uppermost electrode which is uppermost among the plurality of first electrodes, and a first intermediate electrode provided between the first lowermost electrode and the first uppermost electrode, wherein the first conductive jig is bonded to the electrode tab of the first lowermost electrode and the electrode tab of the first uppermost electrode, and the electrode tab of the first intermediate electrode is in contact with the first conductive jig in a bent form.

## Description

### [Technical Field]

The present disclosure relates to an electrode assembly for secondary batteries.

This application claims the benefit of Korean Patent Application No. 10-2024-0151935, filed on October 31, 2024, the disclosure of which is incorporated herein by reference.

### [Background]

Secondary batteries, unlike primary batteries, are capable of being charged and discharged a plurality of times. Secondary batteries are widely used as energy sources for various wireless devices such as handsets, laptops, and cordless vacuum cleaners. A secondary battery may include an electrode assembly disposed within a battery case, and the electrode assembly may include a plurality of negative electrodes, a plurality of positive electrodes, and a separator. The electrode assembly has a stacked structure in which negative electrodes and positive electrodes are alternately stacked, and the separator is disposed between the negative electrode and positive electrode.

### [Summary]

### [Technical Problem]

The technical problem to be solved by the technical idea of the present disclosure is to provide an electrode assembly for secondary batteries.

### [Technical Solution]

To solve the above-described problem, the technical idea of the present disclosure provides an electrode assembly including: a stack including a plurality of first electrodes stacked in a vertical direction; and a first conductive jig connected to electrode tabs of the plurality of first electrodes, wherein the plurality of first electrodes includes a first lowermost electrode which is lowermost among the plurality of first electrodes, a first uppermost electrode which is uppermost among the plurality of first electrodes, and a first intermediate electrode provided between the first lowermost electrode and the first uppermost electrode, wherein the first conductive jig is bonded to the electrode tab of the first lowermost electrode and the electrode tab of the first uppermost electrode, and the electrode tab of the first intermediate electrode is in contact with the first conductive jig in a bent form.

In exemplary embodiments, the first conductive jig includes: a first connection plate comprising an inner surface facing the stack and an outer surface opposite to the inner surface; and a first lead plate extending outward from the outer surface of the first connection plate.

In exemplary embodiments, the electrode tab of the first lowermost electrode and the electrode tab of the first uppermost electrode are in contact with the outer surface of the first connection plate.

In exemplary embodiments, the electrode tab of the first lowermost electrode extends along a bottom surface and the outer surface of the first connection plate to have a bent form, and the electrode tab of the first uppermost electrode extends along an upper surface and the outer surface of the first connection plate to have a bent form.

In exemplary embodiments, the electrode tab of the first lowermost electrode has a bonding part bonded to the outer surface of the first connection plate, and the electrode tab of the first uppermost electrode has a bonding part bonded to the outer surface of the first connection plate.

In exemplary embodiments, the electrode tab of the first intermediate electrode is in contact with the inner surface of the first connection plate.

In exemplary embodiments, two or more of the electrode tab of the first lowermost electrode, the electrode tab of the first uppermost electrode, and the electrode tab of the first intermediate electrode are spaced apart in a horizontal direction.

In exemplary embodiments, the electrode tab of the first lowermost electrode and the electrode tab of the first uppermost electrode are welded to the first conductive jig to be integrated with the first conductive jig, and the electrode tab of the first intermediate electrode is bent by being pressed against the first conductive jig.

In exemplary embodiments, the stack further includes a plurality of second electrodes stacked in the vertical direction, wherein two adjacent second electrodes among the plurality of second electrodes are spaced apart with one of the plurality of first electrodes therebetween, wherein the electrode assembly further includes a second conductive jig connected to electrode tabs of the plurality of second electrodes, wherein the plurality of second electrodes includes a second lowermost electrode which is lowermost among the plurality of second electrodes, a second uppermost electrode which is uppermost among the plurality of second electrodes, and a second intermediate electrode provided between the second lowermost electrode and the second uppermost electrode, wherein the second conductive jig is bonded to the electrode tab of the second lowermost electrode and the electrode tab of the second uppermost electrode, and the electrode tab of the second intermediate electrode is in contact with the second conductive jig in a bent form.

In exemplary embodiments, the second conductive jig includes: a second connection plate comprising an inner surface facing the stack and an outer surface opposite to the inner surface; and a second lead plate extending outward from the outer surface of the second connection plate.

In exemplary embodiments, the electrode tab of the second lowermost electrode is in contact with the outer surface of the second connection plate, the electrode tab of the second uppermost electrode is in contact with the outer surface of the second connection plate, and the electrode tab of the second intermediate electrode is in contact with the inner surface of the second connection plate.

In exemplary embodiments, the electrode tab of the second lowermost electrode extends along a bottom surface and the outer surface of the second connection plate to have a bent form, and the electrode tab of the second uppermost electrode extends along an upper surface and the outer surface of the second connection plate to have a bent form.

In exemplary embodiments, the electrode tab of the second lowermost electrode has a bonding part bonded to the outer surface of the second connection plate, and the electrode tab of the second uppermost electrode has a bonding part bonded to the outer surface of the second connection plate.

In exemplary embodiments, two or more of the electrode tab of the second lowermost electrode, the electrode tab of the second uppermost electrode, and the electrode tab of the second intermediate electrode are spaced apart in a horizontal direction.

In exemplary embodiments, the electrode tab of the second lowermost electrode and the electrode tab of the second uppermost electrode are welded to the second conductive jig to be integrated with the second conductive jig, and the electrode tab of the second intermediate electrode is bent by being pressed against the second conductive jig.

### [Advantageous Effects]

According to exemplary embodiments, the electrode tab of the lowermost electrode and the electrode tab of the uppermost electrode are bonded to a conductive jig that serves as an external terminal of the secondary battery. When the electrode tab of the lowermost electrode and the electrode tab of the uppermost electrode are bonded to the conductive jig, the electrode tabs of the remaining one or more intermediate electrodes are brought into close contact with the conductive jig. Therefore, pre-welding for bonding the electrode tabs of the plurality of electrodes can be omitted, thereby reducing the manufacturing cost of the electrode assembly.

According to exemplary embodiments, since pre-welding for bonding the electrode tabs of the plurality of electrodes is omitted and the plurality of electrode tabs are directly connected to the conductive jig, the minimum dimension of the terrace part of the secondary battery where the conductive jig is located can be reduced. Therefore, the energy density of the secondary battery can be improved by reducing the dimension of the terrace part of the secondary battery where the conductive jig is located. In addition, the design freedom for the terrace part of the secondary battery where the conductive jig is located can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view showing an electrode assembly according to exemplary embodiments.
FIG. 2 is a perspective view showing a first conductive jig provided in the electrode assembly according to exemplary embodiments.
FIG. 3 is a side view showing one side part of the electrode assembly according to exemplary embodiments.
FIG. 4 is a side view showing the other side part of the electrode assembly according to exemplary embodiments.
FIGS. 5a to 5c are cross-sectional views showing a manufacturing method of the electrode assembly according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

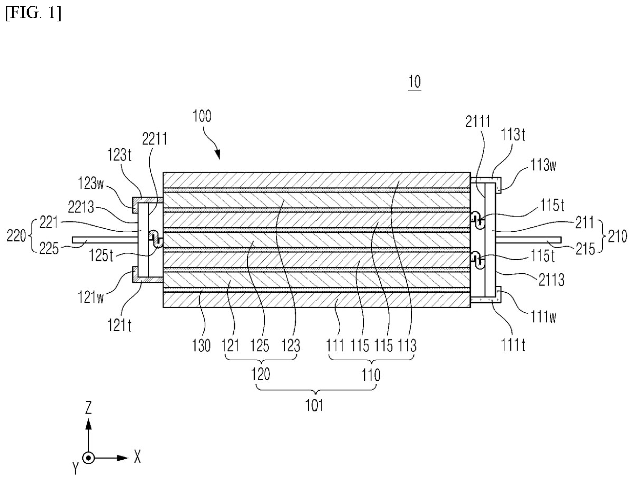

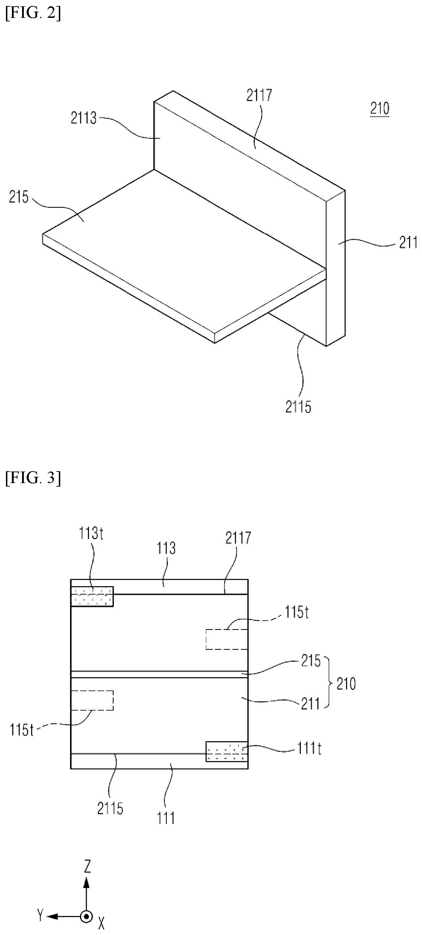

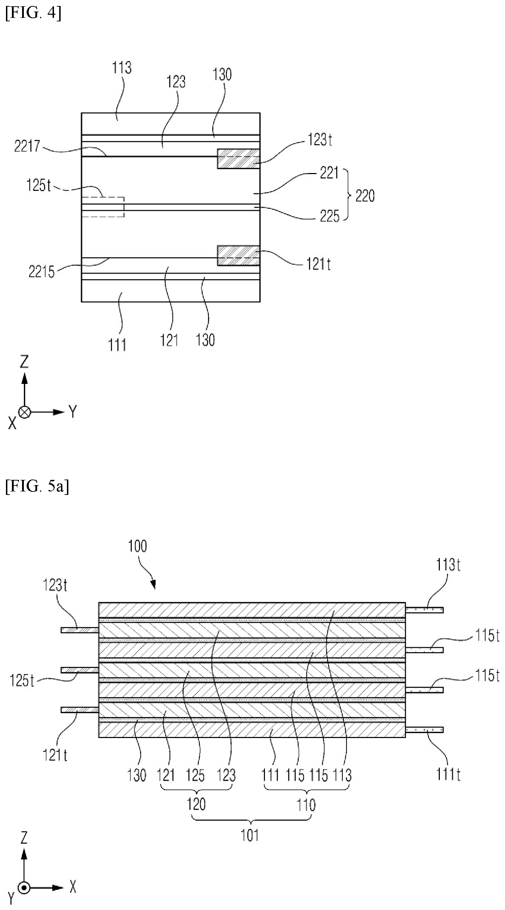

FIG. 1 is a cross-sectional view showing an electrode assembly 10 according to exemplary embodiments. FIG. 2 is a perspective view showing a first conductive jig 210 provided in the electrode assembly 10 according to exemplary embodiments. FIG. 3 is a side view showing one side part of the electrode assembly 10 according to exemplary embodiments. FIG. 4 is a side view showing the other side part of the electrode assembly 10 according to exemplary embodiments.

Referring to FIGS. 1 to 4, the electrode assembly 10 may include a stack 100, a first conductive jig 210, and a second conductive jig 220.

The stack 100 may include a plurality of electrodes 101 and a separator 130. The stack 100 may have a stacked structure in which the plurality of electrodes 101 are stacked in a vertical direction (for example, Z-axis direction). Each individual electrode 101 may have a plate shape extending in a first horizontal direction (for example, X-axis direction) and a second horizontal direction (for example, Y-axis direction). The plurality of electrodes 101 may be spaced apart from each other by the separator 130. A separator 130 may be interposed between two electrodes 101 adjacent to each other in the vertical direction (for example, Z-axis direction) among the plurality of electrodes 101. In exemplary embodiments, the stack 100 may include a plurality of separators 130, and the plurality of separators 130 may be respectively interposed between two electrodes 101 adjacent to each other in the vertical direction (for example, Z-axis direction).

Each individual electrode 101 may correspond to a positive electrode or a negative electrode.

The positive electrode may include a positive electrode current collector and a positive electrode active material coated on the positive electrode current collector. For example, the positive electrode current collector may include aluminum, nickel, titanium, and/or stainless steel. The positive electrode active material is a material capable of causing an electrochemical reaction. The positive electrode active material may include a lithium transition metal oxide. The positive electrode active material may include, for example, layered compounds such as lithium cobalt oxide (LiCoO₂) and lithium nickel oxide (LiNiO₂) substituted with one or more transition metals, lithium manganese oxide substituted with one or more transition metals, lithium nickel-based oxide, lithium nickel cobalt manganese composite oxide, and/or olivine-based lithium metal phosphate.

The negative electrode may include a negative electrode current collector and a negative electrode active material coated on the negative electrode current collector. For example, the negative electrode current collector may include copper, aluminum, nickel, titanium, stainless steel, and/or aluminum-cadmium alloy. The negative electrode active material may include, for example, carbon such as non-graphitizable carbon and graphitic carbon. The negative electrode active material may include, for example, metal composite oxides. The negative electrode active material may include, for example, lithium metal, lithium alloy, silicon-based alloy, and tin-based alloy. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may include, for example, conductive polymers such as polyacetylene, Li-Co-Ni-based materials, and the like.

Each individual electrode 101 may include an electrode tab provided at its side part. The electrode tab of each individual electrode 101 may include the same material as the material of the current collector of each individual electrode 101.

The plurality of electrodes 101 may include a plurality of first electrodes 110 stacked in the vertical direction (for example, Z-axis direction) and a plurality of second electrodes 120 stacked in the vertical direction (for example, Z-axis direction). The first electrode 110 and the second electrode 120 may have different polarities from each other. In exemplary embodiments, the first electrode 110 may be a negative electrode, and the second electrode 120 may be a positive electrode. In exemplary embodiments, the first electrode 110 may be a positive electrode, and the second electrode 120 may be a negative electrode. In the stack 100, the first electrodes 110 and the second electrodes 120 may be alternately stacked in the vertical direction (for example, Z-axis direction). Two first electrodes 110 adjacent to each other in the vertical direction (for example, Z-axis direction) may be spaced apart with one second electrode 120 therebetween, and two second electrodes 120 adjacent to each other in the vertical direction (for example, Z-axis direction) may be spaced apart with one first electrode 110 therebetween.

The plurality of first electrodes 110 may include a first lowermost electrode 111, a first uppermost electrode 113, and a first intermediate electrode 115. The first lowermost electrode 111 may be lowermost among the plurality of first electrodes 110. The first uppermost electrode 113 may be uppermost among the plurality of first electrodes 110. The first intermediate electrode 115 may be between the first lowermost electrode 111 and the first uppermost electrode 113. The plurality of first electrodes 110 may include one or more first intermediate electrodes 115.

The plurality of second electrodes 120 may include a second lowermost electrode 121, a second uppermost electrode 123, and a second intermediate electrode 125. The second lowermost electrode 121 may be lowermost among the plurality of second electrodes 120. The second uppermost electrode 123 may be uppermost among the plurality of second electrodes 120. The second intermediate electrode 125 may be between the second lowermost electrode 121 and the second uppermost electrode 123. The plurality of second electrodes 120 may include one or more second intermediate electrodes 125.

The first conductive jig 210 may face one side part of the stack 100 and may be connected to the plurality of electrode tabs of the plurality of first electrodes 110. In exemplary embodiments, some of the plurality of electrode tabs of the plurality of first electrodes 110 may be coupled to the first conductive jig 210 to be integrated with the first conductive jig 210, and others of the plurality of electrode tabs of the plurality of first electrodes 110 may be simply in contact with the first conductive jig 210. Some of the plurality of electrode tabs of the plurality of first electrodes 110 may be bonded to the first conductive jig 210 through welding, and others of the plurality of electrode tabs of the plurality of first electrodes 110 may be in close contact with the first conductive jig 210 in a bent form. The first conductive jig 210 may include a metal. For example, the first conductive jig 210 may include copper, aluminum, nickel, iron, chromium, gold, silver, or a combination thereof.

The first conductive jig 210 may include a first connection plate 211 and a first lead plate 215.

The first connection plate 211 may have a plate shape substantially parallel to the second horizontal direction (for example, Y-axis direction) and the vertical direction (for example, Z-axis direction). The first connection plate 211 may have a rectangular shape. The first connection plate 211 may include an inner surface 2111 facing the stack 100 and an outer surface 2113 opposite to the inner surface 2111. The first connection plate 211 may contact the plurality of electrode tabs of the plurality of first electrodes 110.

The first lead plate 215 may be connected to the outer surface 2113 of the first connection plate 211 and may extend outward from the outer surface 2113 of the first connection plate 211. The first lead plate 215 may have a plate shape substantially parallel to the first horizontal direction (for example, X-axis direction) and the second horizontal direction (for example, Y-axis direction). The first lead plate 215 may have a rectangular shape. The electrode assembly 10 may constitute a secondary battery together with a cell case that accommodates the electrode assembly 10. In the secondary battery, a portion of the first lead plate 215 may be accommodated in the cell case, and another portion of the first lead plate 215 may protrude to the outside of the cell case.

The electrode tab 111t of the first lowermost electrode 111 may be bonded to the first connection plate 211 to be integrated with the first connection plate 211. In exemplary embodiments, the electrode tab 111t of the first lowermost electrode 111 may be coupled to the first connection plate 211 through welding. The electrode tab 111t of the first lowermost electrode 111 may contact the bottom surface 2115 and the outer surface 2113 of the first connection plate 211. The electrode tab 111t of the first lowermost electrode 111 may contact the bottom surface 2115 and the outer surface 2113 of the first connection plate 211 and may extend along the bottom surface 2115 and the outer surface 2113 of the first connection plate 211 to have a bent form. The electrode tab 111t of the first lowermost electrode 111 and the outer surface 2113 of the first connection plate 211 may make surface contact. The electrode tab 111t of the first lowermost electrode 111 may have a bonding part 111w bonded to the outer surface 2113 of the first connection plate 211. The bonding part 111w of the electrode tab 111t of the first lowermost electrode 111 may be formed through welding between the electrode tab 111t of the first lowermost electrode 111 and the first connection plate 211.

The electrode tab 113t of the first uppermost electrode 113 may be bonded to the first connection plate 211 to be integrated with the first connection plate 211. In exemplary embodiments, the electrode tab 113t of the first uppermost electrode 113 may be coupled to the first connection plate 211 through welding. The electrode tab 113t of the first uppermost electrode 113 may contact the upper surface 2117 and the outer surface 2113 of the first connection plate 211. The electrode tab 113t of the first uppermost electrode 113 may contact the upper surface 2117 and the outer surface 2113 of the first connection plate 211 and may extend along the upper surface 2117 and the outer surface 2113 of the first connection plate 211 to have a bent form. The electrode tab 113t of the first uppermost electrode 113 and the outer surface 2113 of the first connection plate 211 may make surface contact. The electrode tab 113t of the first uppermost electrode 113 may have a bonding part 113w bonded to the outer surface 2113 of the first connection plate 211. The bonding part 113w of the electrode tab 113t of the first uppermost electrode 113 may be formed through welding between the electrode tab 113t of the first uppermost electrode 113 and the first connection plate 211.

The electrode tab 115t of the first intermediate electrode 115 may be in contact with the inner surface 2111 of the first connection plate 211. The electrode tab 115t of the first intermediate electrode 115 may be deformed into a bent form by being pressed against the first conductive jig 210, and the electrode tab 115t of the first intermediate electrode 115 may be in close contact with the inner surface 2111 of the first connection plate 211 in a bent state. The electrode tab 115t of the first intermediate electrode 115 may simply be in contact with the first connection plate 211. When the electrode tab 111t of the first lowermost electrode 111 and the electrode tab 113t of the first uppermost electrode 113 are bonded to the first connection plate 211 through welding, the electrode tab 115t of the first intermediate electrode 115 may be configured to be in close contact with the first connection plate 211 without welding.

In exemplary embodiments, two or more electrode tabs among the plurality of electrode tabs of the plurality of first electrodes 110 may not be aligned in the vertical direction (for example, Z-axis direction). In exemplary embodiments, two or more of the electrode tab 111t of the first lowermost electrode 111, the electrode tab 113t of the first uppermost electrode 113, and the electrode tab 115t of the first intermediate electrode 115 may not be aligned in the vertical direction (for example, Z-axis direction). For example, at least two of the electrode tab 111t of the first lowermost electrode 111, the electrode tab 113t of the first uppermost electrode 113, and the electrode tab 115t of the first intermediate electrode 115 may be spaced apart in the second horizontal direction (for example, Y-axis direction). For example, at least two of the center of the electrode tab 111t of the first lowermost electrode 111, the center of the electrode tab 113t of the first uppermost electrode 113, and the center of the electrode tab 115t of the first intermediate electrode 115 may be spaced apart in the second horizontal direction (for example, Y-axis direction). For example, some of the electrode tab 111t of the first lowermost electrode 111, the electrode tab 113t of the first uppermost electrode 113, and the electrode tab 115t of the first intermediate electrode 115 may be connected to one edge part of the first connection plate 211 along the second horizontal direction (for example, Y-axis direction), and the remaining some of the electrode tab 111t of the first lowermost electrode 111, the electrode tab 113t of the first uppermost electrode 113, and the electrode tab 115t of the first intermediate electrode 115 may be connected to the other edge part of the first connection plate 211 along the second horizontal direction (for example, Y-axis direction).

The second conductive jig 220 may face the other side part of the stack 100 and may be connected to the plurality of electrode tabs of the plurality of second electrodes 120. For example, the first conductive jig 210 and the second conductive jig 220 may be spaced apart in the first horizontal direction (for example, X-axis direction) with the stack 100 therebetween. In exemplary embodiments, some of the plurality of electrode tabs of the plurality of second electrodes 120 may be coupled to the second conductive jig 220 to be integrated with the second conductive jig 220, and others of the plurality of electrode tabs of the plurality of second electrodes 120 may be simply in contact with the second conductive jig 220. Some of the plurality of electrode tabs of the plurality of second electrodes 120 may be bonded to the second conductive jig 220 through welding, and others of the plurality of electrode tabs of the plurality of second electrodes 120 may be in close contact with the second conductive jig 220 in a bent form. The second conductive jig 220 may include a metal. For example, the second conductive jig 220 may include copper, aluminum, nickel, iron, chromium, gold, silver, or a combination thereof.

The second conductive jig 220 may include a second connection plate 221 and a second lead plate 225.

The second connection plate 221 may have a plate shape substantially parallel to the second horizontal direction (for example, Y-axis direction) and the vertical direction (for example, Z-axis direction). The second connection plate 221 may have a rectangular shape. The second connection plate 221 may include an inner surface 2211 facing the stack 100 and an outer surface 2213 opposite to the inner surface 2211. The second connection plate 221 may contact the plurality of electrode tabs of the plurality of second electrodes 120.

The second lead plate 225 may be connected to the outer surface 2213 of the second connection plate 221 and may extend outward from the outer surface 2213 of the second connection plate 221. The second lead plate 225 may have a plate shape substantially parallel to the first horizontal direction (for example, X-axis direction) and the second horizontal direction (for example, Y-axis direction). The second lead plate 225 may have a rectangular shape. In a secondary battery including the electrode assembly 10 and the cell case, a portion of the second lead plate 225 may be accommodated in the cell case, and another portion of the second lead plate 225 may protrude to the outside of the cell case.

The electrode tab 121t of the second lowermost electrode 121 may be bonded to the second connection plate 221 to be integrated with the second connection plate 221. In exemplary embodiments, the electrode tab 121t of the second lowermost electrode 121 may be coupled to the second connection plate 221 through welding. The electrode tab 121t of the second lowermost electrode 121 may contact the bottom surface 2215 and the outer surface 2213 of the second connection plate 221. The electrode tab 121t of the second lowermost electrode 121 may contact the bottom surface 2215 and the outer surface 2213 of the second connection plate 221 and may extend along the bottom surface 2215 and the outer surface 2213 of the second connection plate 221 to have a bent form. The electrode tab 121t of the second lowermost electrode 121 and the outer surface 2213 of the second connection plate 221 may make surface contact. The electrode tab 121t of the second lowermost electrode 121 may have a bonding part 121w bonded to the outer surface 2213 of the second connection plate 221. The bonding part 121w of the electrode tab 121t of the second lowermost electrode 121 may be formed through welding between the electrode tab 121t of the second lowermost electrode 121 and the second connection plate 221.

The electrode tab 123t of the second uppermost electrode 123 may be bonded to the second connection plate 221 to be integrated with the second connection plate 221. In exemplary embodiments, the electrode tab 123t of the second uppermost electrode 123 may be coupled to the second connection plate 221 through welding. The electrode tab 123t of the second uppermost electrode 123 may contact the upper surface 2217 and the outer surface 2213 of the second connection plate 221. The electrode tab 123t of the second uppermost electrode 123 may contact the upper surface 2217 and the outer surface 2213 of the second connection plate 221 and may extend along the upper surface 2217 and the outer surface 2213 of the second connection plate 221 to have a bent form. The electrode tab 123t of the second uppermost electrode 123 and the outer surface 2213 of the second connection plate 221 may make surface contact. The electrode tab 123t of the second uppermost electrode 123 may have a bonding part 123w bonded to the outer surface 2213 of the second connection plate 221. The bonding part 123w of the electrode tab 123t of the second uppermost electrode 123 may be formed through welding between the electrode tab 123t of the second uppermost electrode 123 and the second connection plate 221.

The electrode tab 125t of the second intermediate electrode 125 may be in contact with the inner surface 2211 of the second connection plate 221. The electrode tab 125t of the second intermediate electrode 125 may be deformed into a bent form by being pressed against the second conductive jig 220, and the electrode tab 125t of the second intermediate electrode 125 may be in close contact with the inner surface 2211 of the second connection plate 221 in a bent state. The electrode tab 125t of the second intermediate electrode 125 may simply be in contact with the second connection plate 221. When the electrode tab 121t of the second lowermost electrode 121 and the electrode tab 123t of the second uppermost electrode 123 are bonded to the second connection plate 221 through welding, the electrode tab 125t of the second intermediate electrode 125 may be configured to be in close contact with the second connection plate 221 without welding.

In exemplary embodiments, two or more electrode tabs among the plurality of electrode tabs of the plurality of second electrodes 120 may not be aligned in the vertical direction (for example, Z-axis direction). In exemplary embodiments, two or more of the electrode tab 121t of the second lowermost electrode 121, the electrode tab 123t of the second uppermost electrode 123, and the electrode tab 125t of the second intermediate electrode 125 may not be aligned in the vertical direction (for example, Z-axis direction). For example, at least two of the electrode tab 121t of the second lowermost electrode 121, the electrode tab 123t of the second uppermost electrode 123, and the electrode tab 125t of the second intermediate electrode 125 may be spaced apart in the second horizontal direction (for example, Y-axis direction). For example, at least two of the center of the electrode tab 121t of the second lowermost electrode 121, the center of the electrode tab 123t of the second uppermost electrode 123, and the center of the electrode tab 125t of the second intermediate electrode 125 may be spaced apart in the second horizontal direction (for example, Y-axis direction). For example, some of the electrode tab 121t of the second lowermost electrode 121, the electrode tab 123t of the second uppermost electrode 123, and the electrode tab 125t of the second intermediate electrode 125 may be connected to one edge part of the second connection plate 221 along the second horizontal direction (for example, Y-axis direction), and the remaining some of the electrode tab 121t of the second lowermost electrode 121, the electrode tab 123t of the second uppermost electrode 123, and the electrode tab 125t of the second intermediate electrode 125 may be connected to the other edge part of the second connection plate 221 along the second horizontal direction (for example, Y-axis direction).

### (Second embodiment)

FIGS. 5a to 5c are cross-sectional views showing a manufacturing method of the electrode assembly 10 according to exemplary embodiments. Hereinafter, a manufacturing method of the electrode assembly 10 described with reference to FIGS. 1 to 4 will be described with reference to FIGS. 5a to 5c.

Referring to FIG. 5a, the manufacturing method of the electrode assembly 10 includes preparing the stack 100. In exemplary embodiments, the stack 100 may be formed through a lamination and stacking process. For example, the stack 100 may be formed by stacking at least one half-cell, at least one mono-cell, and/or at least one bi-cell in the vertical direction (for example, Z-axis direction).

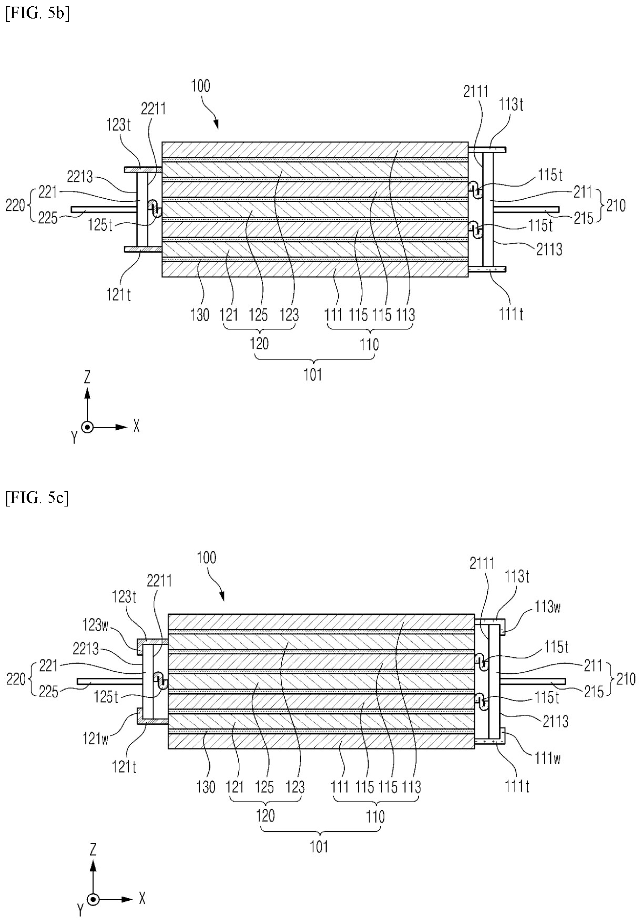

Referring to FIGS. 5b and 5c, the manufacturing method of the electrode assembly 10 includes coupling the first conductive jig 210 to the stack 100.

The step of coupling the first conductive jig 210 to the stack 100 may include bringing the first conductive jig 210 into close contact with the side part of the stack 100, and welding the electrode tab 111t of the first lowermost electrode 111 and the electrode tab 113t of the first uppermost electrode 113 to the first conductive jig 210.

In the step of bringing the first conductive jig 210 into close contact with the side part of the stack 100, the electrode tab 115t of the first intermediate electrode 115 may be deformed into a bent form by being pressed against the first conductive jig 210.

The step of welding the electrode tab 111t of the first lowermost electrode 111 to the first conductive jig 210 may include folding the electrode tab 111t of the first lowermost electrode 111 such that the electrode tab 111t of the first lowermost electrode 111 contacts the bottom surface 2115 and the outer surface 2113 of the first connection plate 211, and welding the electrode tab 111t of the first lowermost electrode 111 and the first conductive jig 210 such that the electrode tab 111t of the first lowermost electrode 111 is bonded to the outer surface 2113 of the first connection plate 211. When the welding between the electrode tab 111t of the first lowermost electrode 111 and the first conductive jig 210 is completed, the electrode tab 111t of the first lowermost electrode 111 may have a bonding part 111w bonded to the outer surface 2113 of the first connection plate 211.

The step of welding the electrode tab 113t of the first uppermost electrode 113 to the first conductive jig 210 may include folding the electrode tab 113t of the first uppermost electrode 113 such that the electrode tab 113t of the first uppermost electrode 113 contacts the upper surface 2117 and the outer surface 2113 of the first connection plate 211, and welding the electrode tab 113t of the first uppermost electrode 113 and the first conductive jig 210 such that the electrode tab 113t of the first uppermost electrode 113 is bonded to the outer surface 2113 of the first connection plate 211. When the welding between the electrode tab 113t of the first uppermost electrode 113 and the first conductive jig 210 is completed, the electrode tab 113t of the first uppermost electrode 113 may have a bonding part 113w bonded to the outer surface 2113 of the first connection plate 211.

When the electrode tab 111t of the first lowermost electrode 111 and the electrode tab 113t of the first uppermost electrode 113 are each welded to the first conductive jig 210, the first conductive jig 210 may be fixed to the stack 100, and the electrode tab 115t of the first intermediate electrode 115 may be in close contact with the inner surface 2111 of the first connection plate 211 in a bent state.

Referring to FIGS. 5b and 5c, the manufacturing method of the electrode assembly 10 includes coupling the second conductive jig 220 to the stack 100.

The step of coupling the second conductive jig 220 to the stack 100 may include bringing the second conductive jig 220 into close contact with the side part of the stack 100, and welding the electrode tab 121t of the second lowermost electrode 121 and the electrode tab 123t of the second uppermost electrode 123 to the second conductive jig 220.

In the step of bringing the second conductive jig 220 into close contact with the side part of the stack 100, the electrode tab 125t of the second intermediate electrode 125 may be deformed into a bent form by being pressed against the second conductive jig 220.

The step of welding the electrode tab 121t of the second lowermost electrode 121 to the second conductive jig 220 may include folding the electrode tab 121t of the second lowermost electrode 121 such that the electrode tab 121t of the second lowermost electrode 121 contacts the bottom surface 2215 and the outer surface 2213 of the second connection plate 221, and welding the electrode tab 121t of the second lowermost electrode 121 and the second conductive jig 220 such that the electrode tab 121t of the second lowermost electrode 121 is bonded to the outer surface 2213 of the second connection plate 221. When the welding between the electrode tab 121t of the second lowermost electrode 121 and the second conductive jig 220 is completed, the electrode tab 121t of the second lowermost electrode 121 may have a bonding part 121w bonded to the outer surface 2213 of the second connection plate 221.

The step of welding the electrode tab 123t of the second uppermost electrode 123 to the second conductive jig 220 may include folding the electrode tab 123t of the second uppermost electrode 123 such that the electrode tab 123t of the second uppermost electrode 123 contacts the upper surface 2217 and the outer surface 2213 of the second connection plate 221, and welding the electrode tab 123t of the second uppermost electrode 123 and the second conductive jig 220 such that the electrode tab 123t of the second uppermost electrode 123 is bonded to the outer surface 2213 of the second connection plate 221. When the welding between the electrode tab 123t of the second uppermost electrode 123 and the second conductive jig 220 is completed, the electrode tab 123t of the second uppermost electrode 123 may have a bonding part 123w bonded to the outer surface 2213 of the second connection plate 221.

When the electrode tab 121t of the second lowermost electrode 121 and the electrode tab 123t of the second uppermost electrode 123 are each welded to the second conductive jig 220, the second conductive jig 220 may be fixed to the stack 100, and the electrode tab 125t of the second intermediate electrode 125 may be in close contact with the inner surface 2211 of the second connection plate 221 in a bent state.

When manufacturing an electrode assembly according to a comparative example, electrode tabs of a plurality of electrodes are pre-welded to form an electrode tab assembly, and then the electrode tab assembly is welded to an electrode lead that becomes an external terminal of the secondary battery.

According to exemplary embodiments, the electrode tab of the lowermost electrode and the electrode tab of the uppermost electrode are bonded to a conductive jig that serves as an external terminal of the secondary battery. When the electrode tab of the lowermost electrode and the electrode tab of the uppermost electrode are bonded to the conductive jig, the electrode tabs of the remaining one or more intermediate electrodes are brought into close contact with the conductive jig. Therefore, pre-welding for bonding the electrode tabs of the plurality of electrodes can be omitted, thereby reducing the manufacturing cost of the electrode assembly.

According to exemplary embodiments, since pre-welding for bonding the electrode tabs of the plurality of electrodes is omitted and the plurality of electrode tabs are directly connected to the conductive jig, the minimum dimension of the terrace part of the secondary battery where the conductive jig is located can be reduced. Therefore, the energy density of the secondary battery can be improved by reducing the dimension of the terrace part of the secondary battery where the conductive jig is located. In addition, the design freedom for the terrace part of the secondary battery where the conductive jig is located can be improved.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. An electrode assembly comprising:
a stack comprising a plurality of first electrodes stacked in a vertical direction; and
a first conductive jig connected to electrode tabs of the plurality of first electrodes, wherein
the plurality of first electrodes comprises a first lowermost electrode which is lowermost among the plurality of first electrodes, a first uppermost electrode which is uppermost among the plurality of first electrodes, and a first intermediate electrode provided between the first lowermost electrode and the first uppermost electrode, wherein
the first conductive jig is bonded to the electrode tab of the first lowermost electrode and the electrode tab of the first uppermost electrode, and
the electrode tab of the first intermediate electrode is in contact with the first conductive jig in a bent form.

2. The electrode assembly of claim 1, wherein
the first conductive jig comprises:
a first connection plate comprising an inner surface facing the stack and an outer surface opposite to the inner surface; and
a first lead plate extending outward from the outer surface of the first connection plate.

3. The electrode assembly of claim 2, wherein
the electrode tab of the first lowermost electrode and the electrode tab of the first uppermost electrode are in contact with the outer surface of the first connection plate.

4. The electrode assembly of claim 3, wherein
the electrode tab of the first lowermost electrode extends along a bottom surface and the outer surface of the first connection plate to have a bent form, and
the electrode tab of the first uppermost electrode extends along an upper surface and the outer surface of the first connection plate to have a bent form.

5. The electrode assembly of claim 3, wherein
the electrode tab of the first lowermost electrode has a bonding part bonded to the outer surface of the first connection plate, and
the electrode tab of the first uppermost electrode has a bonding part bonded to the outer surface of the first connection plate.

6. The electrode assembly of claim 2, wherein
the electrode tab of the first intermediate electrode is in contact with the inner surface of the first connection plate.

7. The electrode assembly of claim 1, wherein
two or more of the electrode tab of the first lowermost electrode, the electrode tab of the first uppermost electrode, and the electrode tab of the first intermediate electrode are spaced apart in a horizontal direction.

8. The electrode assembly of claim 1, wherein
the electrode tab of the first lowermost electrode and the electrode tab of the first uppermost electrode are welded to the first conductive jig to be integrated with the first conductive jig, and
the electrode tab of the first intermediate electrode is bent by being pressed against the first conductive jig.

9. The electrode assembly of claim 1, wherein
the stack further comprises a plurality of second electrodes stacked in the vertical direction, wherein
two adjacent second electrodes among the plurality of second electrodes are spaced apart with one of the plurality of first electrodes therebetween, wherein
the electrode assembly further comprises a second conductive jig connected to electrode tabs of the plurality of second electrodes, wherein
the plurality of second electrodes comprises a second lowermost electrode which is lowermost among the plurality of second electrodes, a second uppermost electrode which is uppermost among the plurality of second electrodes, and a second intermediate electrode provided between the second lowermost electrode and the second uppermost electrode, wherein
the second conductive jig is bonded to the electrode tab of the second lowermost electrode and the electrode tab of the second uppermost electrode, and
the electrode tab of the second intermediate electrode is in contact with the second conductive jig in a bent form.

10. The electrode assembly of claim 9, wherein
the second conductive jig comprises:
a second connection plate comprising an inner surface facing the stack and an outer surface opposite to the inner surface; and
a second lead plate extending outward from the outer surface of the second connection plate.

11. The electrode assembly of claim 10, wherein
the electrode tab of the second lowermost electrode is in contact with the outer surface of the second connection plate,
the electrode tab of the second uppermost electrode is in contact with the outer surface of the second connection plate, and
the electrode tab of the second intermediate electrode is in contact with the inner surface of the second connection plate.

12. The electrode assembly of claim 10, wherein
the electrode tab of the second lowermost electrode extends along a bottom surface and the outer surface of the second connection plate to have a bent form, and
the electrode tab of the second uppermost electrode extends along an upper surface and the outer surface of the second connection plate to have a bent form.

13. The electrode assembly of claim 10, wherein
the electrode tab of the second lowermost electrode has a bonding part bonded to the outer surface of the second connection plate, and
the electrode tab of the second uppermost electrode has a bonding part bonded to the outer surface of the second connection plate.

14. The electrode assembly of claim 9, wherein
two or more of the electrode tab of the second lowermost electrode, the electrode tab of the second uppermost electrode, and the electrode tab of the second intermediate electrode are spaced apart in a horizontal direction.

15. The electrode assembly of claim 9, wherein
the electrode tab of the second lowermost electrode and the electrode tab of the second uppermost electrode are welded to the second conductive jig to be integrated with the second conductive jig, and
the electrode tab of the second intermediate electrode is bent by being pressed against the second conductive jig.
